# EUROPÄISCHE PATENTANMELDUNG

(11) **EP 2 045 036 A1**
(43) Veröffentlichungstag der Anmeldung: **08.04.2009**
(21) Anmeldenummer: 07019479.0
(22) Anmeldetag: 04.10.2007
(51) Int. Cl.: B23Q 3/155, H02K 19/10

(54) **Werkzeugwechselvorrichtung mit einem direktangetriebenen Hub- und Schwenkaktor**

(71) Anmelder: SIEMENS AKTIENGESELLSCHAFT, 80333 München (DE)
(72) Erfinder: Jajtic, Zeljko, Dr., 80992 München (DE); Klaus, Maximilian, 70469 Stuttgart (DE)

(57) **Zusammenfassung**

Die Erfindung betrifft eine Werkzeugwechselvorrichtung (1) mit einem Werkzeuggreifer (2) und einem Hub- und Schwenkaktor (3), welcher mit einem ersten Direktantrieb (4) zur Erzeugung einer Linearbewegung und einem zweiten Direktantrieb (5) zur Erzeugung einer Rotationsbewegung antreibbar ist, wobei der erste und der zweite Direktantrieb (4, 5) einen gemeinsamen Rotor aufweisen, welcher als Hub- und Schwenkaktor (3) dient.

## Beschreibung

Die Erfindung betrifft eine Werkzeugwechselvorrichtung mit einem Werkzeuggreifer und mit einem Hub- und Schwenkaktor, welcher mit einem ersten Direktantrieb zur Erzeugung einer Linearbewegung und einem zweiten Direktantrieb zur Erzeugung einer Rotationsbewegung antreibbar ist.

Werkzeugwechselvorrichtungen, auch als Werkzeugwechsler bezeichnet, sind vorgesehen für das Wechseln von Werkzeugen an Bearbeitungszentren, Werkzeug- oder Produktionsmaschinen. Eine Werkzeugwechselvorrichtung ist eine mechanische Einrichtung zum automatischen Einwechseln von Werkzeugen oder prozessbedingten Hilfsmitteln, wie Messtastern, Greifern oder Messdornen, wobei die Werkzeuge aus einem Werkzeugmagazin in eine Bearbeitungsspindel oder dergleichen und umgekehrt gewechselt werden. Der Wechselvorgang erfolgt beispielsweise mit Einfach- oder Doppelgreifern, wobei die Werkzeugwechselzeit direkten Einfluss auf die Bearbeitungszeit des Bearbeitungszentrums hat.

Das Wechseln von Werkzeugen erfolgt im Wesentlichen über eine Kombination aus einer Hubbewegung und einer Schwenkbewegung. Um die Nebenzeiten, insbesondere die Werkzeugwechselzeiten, gering zu halten, sind für Werkzeugwechsler dynamische und steife Positionierantriebe mit geringen Trägheitsmassen erforderlich.

Es ist bekannt, Werkzeugwechsler über separate Motoren (elektrisch, pneumatisch, hydraulisch) oder über eine Kulisse mittels Kurvenscheibe anzutreiben. Die hohe geforderte Dynamik ist jedoch mit der herkömmlichen Technik mit hohem Verschleiß und damit geringer Verfügbarkeit verbunden.

Aus der DE 10 2005 019 112 A1 ist ein Kombinationsantrieb mit Hybridreluktanzmotor bekannt, wobei eine Linearantriebseinrichtung und eine Rotationsantriebseinrichtung vorgesehen ist und mindestens eine der beiden Antriebsvorrichtungen als Hybridreluktanzmotor ausgebildet ist.

Die Aufgabe der vorliegenden Erfindung ist es, eine Werkzeugwechselvorrichtung für einen schnellen und dynamischen Werkzeugwechsel bereitzustellen.

Die Aufgabe wird durch die Merkmale des Patentanspruchs 1 gelöst. Vorteilhafte Weiterbildungen sind den abhängigen Patentansprüchen zu entnehmen.

Die erfindungsgemäße Werkzeugwechselvorrichtung weist einen Hub- und Schwenkaktor zur Ausführung von Hub- und Schwenkbewegungen auf. Der Hub- und Schwenkaktor ist mittels zwei Direktantrieben antreibbar, wobei ein erster Direktantrieb zur Erzeugung einer Linearbewegung (Hubbewegung) und ein zweiter Direktantrieb zur Erzeugung einer Rotationsbewegung (Schwenkbewegung) angeordnet sind. Der Hub- und Schwenkaktor ist so ausgebildet, dass mit dem zweiten Direktantrieb sowohl Schwenkbewegungen als auch Rotationsbewegungen, d. h. Drehungen größer 360°, ausgeführt werden können.

Der erste Direktantrieb ist als Solenoid-Linearmotor, d. h. Linearmotor mit Solenoidspulen, auch als Ring- bzw. Zylinderspulen bezeichnet, und der zweite Direktantrieb als Torquemotor bzw. Drehmomentmotor ausgebildet.

Erfindungsgemäß weisen erster und zweiter Direktantrieb einen gemeinsamen Rotor, auch als Reaktionsteil bezeichnet, auf, wobei der Rotor gleichzeitig der Hub- und Schwenkaktor ist.

Durch die Erfindung wird ein Solenoid-Linearmotor für die Hubbewegung mit einem Torquemotor zur Realisierung der Schwenkbewegung kombiniert. Dabei nutzen beide Aktoren gemeinsam ein Reaktionsteil (Rotor), welches vorteilhafterweise in Form einer Hohlwelle ausgebildet ist. Hub- und Schwenkachse können unabhängig voneinander bewegt werden. Der Einsatz von Direktantrieben in beiden Achsen erhöht die Dynamik und die dynamische Störsteifigkeit.

Durch die Nutzung eines gemeinsamen Reaktionsteils für Hub-und Schwenkbewegung können die Trägheitsmassen der einzelnen Achsen des Werkzeugwechslers deutlich reduziert und gleichzeitig die mechanische Steifigkeit erhöht werden.

Da der Rotor bzw. das Reaktionsteil vorteilhafterweise in Form einer Hohlwelle ausgebildet ist, kann der Werkzeuggreifer mit Medien, die für den Betrieb des Werkzeuggreifers (Werkzeugwechselzange) und/oder eines Werkzeugs notwendig sind, über pneumatisch oder hydraulische Versorgungsleitungen, welche durch den hohlen Rotor geführt sind, versorgt werden. Dabei ist insbesondere an dem dem Werkzeuggreifer gegenüberliegenden Ende des Hub- und Schwenkaktors eine Drehdurchführung angeordnet, durch die die Leitungen von außen in den Hub- und Schwenkaktor eingeführt werden.

Der Rotor, welcher den Hub- und Schwenkaktor darstellt, weist vorzugsweise ein Reluktanzprofil mit gleichmäßig sowohl in Umfangsrichtung als auch in axialer Richtung verteilten Zähnen und Nuten auf, wobei der Rotor über seine gesamte axiale Erstreckung einheitlich strukturiert ist. Der Rotor ist demnach frei von aktiven Mitteln zur Erzeugung magnetischer Felder und ist lediglich als Reaktionsteil mit Mitteln zur Führung magnetischer Felder, beispielsweise aus Eisen oder Stahl, ausgebildet. Derartige Reaktionsteile sind kostengünstig und einfach zu fertigen.

Vorteilhafterweise ist in den Nuten des Reluktanzprofils des Rotors nicht-ferritisches Material angeordnet, derart, dass der Rotor eine im Wesentlichen glatte Oberfläche aufweist. Die Nuten werden glatt verschlossen, so dass der Rotor bzw. der Hub- und Schwenkaktor wie ein Pneumatik- oder Hydraulikzylinder gelagert und gedichtet werden kann. Somit kann der Hub- und Schwenkaktor gleichzeitig als Führung, beispielsweise Gleitführung oder Kugelbuchse, für die Direktantriebe dienen. Dadurch ist der Konstruktionsaufwand reduziert, da weniger mechanische Komponenten durch Wegfall von Getriebe und Kupplungen, vorhanden sind.

Jeder Direktantrieb weist eine Statorkomponente auf, d. h. es ist eine erste und zweite Statorkomponente vorhanden. Beide Statorkomponenten bilden eine Statoreinheit, wobei die Statoreinheit fest mit einem Maschinengestell verbunden ist. Alternativ kann die Statoreinheit auch ein Gehäuse aufweisen, über welches die Statoreinheit mit dem Maschinengestell verbunden ist. Da an der Statoreinheit die Anschlussleitungen für die Direktantriebe angeschlossen sind, müssen die Anschlussleitungen zusammen mit der Statoreinheit nicht.mitbewegt werden, wodurch die Dynamik der Werkzeugwechselvorrichtung weiter erhöht wird.

Jede Statorkomponente weist eine ein- oder mehrphasige Wicklung auf. Insbesondere ist jeweils eine dreiphasige Wicklung zum Anschluss an ein Drehstromnetz vorgesehen. Die Wicklung der ersten Statorkomponente des ersten Direktantriebs, welcher zur Erzeugung der Linear- bzw. Hubbewegung vorgesehen ist, ist dabei mittels Solenoidspulen, auch als Zylinder-oder Ringspulen bezeichnet, ausgebildet. Die Wicklung der zweiten Statorkomponente ist mittels bekannter konzentrierter oder verteilter Wicklung ausgeführt.

In einer weiteren Ausgestaltung der Erfindung sind an jeder Statorkomponente zusätzlich zur Wicklung Permanentmagnete angeordnet. Somit weist jede Statorkomponente zwei aktive Mittel zur Erzeugung magnetischer Felder auf, wodurch eine höhere Kraftdichte erzielt wird. Diese ist insbesondere daher von Vorteil, da der Rotor frei von aktiven Mitteln zur Erzeugung magnetischer Felder ist.

An den Hub- und Schwenkaktor können abhängig von der Größe der zu wechselnden Werkzeuge unterschiedliche Anforderungen an Kraft und/oder Momente gestellt sein. Die Kraft bzw. das Moment ist vorteilhafterweise durch Anordnen weiterer Statorkomponenten einstellbar. Insbesondere ist durch Parallelschalten mehrerer Statorkomponenten das Moment skalierbar, d. h. beim Anordnen von weiteren zwei Statorkomponenten (so dass insgesamt vier Statorkomponenten vorhanden sind) ist das Moment verdoppelt.

Bei linearen Direktantrieben ist es bekannt, einen pneumatischen oder hydraulischen Gewichtsausgleich zur Entlastung des Antriebs im Betrieb und zur Sicherheit bei Betriebsstörungen einzusetzen. Der Hub- und Schwenkaktor der erfindungsgemäßen Werkzeugwechselvorrichtung ist einfach um diese Funktion erweiterbar, indem der Hub- und Schwenkaktor zugleich als Kolben eines pneumatischen oder hydraulischen Zylinders ausgebildet ist und funktioniert. Dabei ist ein Druckraum des Zylinders direkt an einen Speicher angeschlossen. Der Druck des geschlossenen Systems wird so hoch eingestellt, dass die Gewichtskraft kompensiert wird. Das Systemvolumen im Zylinder und Speicher ist so groß bemessen, dass die Volumenänderung aufgrund von Hubbewegung der Kolbenstange nur geringe Druckänderung gegenüber dem eingestellten Systemdruck hervorruft.

Die erfindungsgemäße Werkzeugwechselvorrichtung arbeitet dynamisch und schnell und ist robust und weitgehend verschleißfrei ausgeführt, weil durch die Anordnung der Direktantriebe und der Bauform
- ein sehr kompaktes Hub- und Schwenkmodul mit direkter Kraft- und Momentübertragung ohne mechanische verschleißbehaftete Übertragungsglieder realisiert ist,
- die Trägheitsmassen der beiden Antriebe (Stellglieder) aufgrund eines gemeinsamen Reaktionsteils sehr gering sind,
- eine hohe mechanische Steifigkeit und Antriebssteifigkeit aufgrund des hohlwellenförmigen Reaktionsteils mit einer hohen mechanischen Eigenfrequenz gegeben ist.

Die Werkzeugwechselvorrichtung, auch als Werkzeugwechsler bezeichnet, ist vorgesehen für das Wechseln von Werkzeugen an Bearbeitungszentren, Werkzeug- oder Produktionsmaschinen oder auch als integrierter Antrieb der Werkzeugbruchkontrolle sowie weitere ähnliche Werkzeugmaschinen-Anwendungen, in welchen ein integrierter Hub- und Schwenkantrieb auf Basis eines zylinderförmigen Aktors große konstruktive und antriebstechnische Vorteile sicherstellt.

In der nachfolgenden Beschreibung werden weitere Merkmale und Einzelheiten der Erfindung im Zusammenhang mit den beigefügten Zeichnungen anhand von Ausführungsbeispielen näher erläutert. Dabei sind in einzelnen Varianten beschriebene Merkmale und Zusammenhänge grundsätzlich auf alle Ausführungsbeispiele übertragbar. In den Zeichnungen zeigen:
- FIG 1: eine erste Ausgestaltung einer erfindungsgemäßen Werkzeugwechselvorrichtung,
- FIG 2: eine zweite Ausgestaltung einer erfindungsgemäßen Werkzeugwechselvorrichtung,
- FIG 3: eine Ausgestaltung für einen Hub- und Schwenkaktor (Rotor),
- FIG 4: eine Prinzipdarstellung eines Hub- und Schwenkaktors (Rotors) mit Statoreinheit, und
- FIG 5: eine Prinzipdarstellung eines Hub- und Schwenkaktors (Rotors) mit mehreren Statorkomponenten.

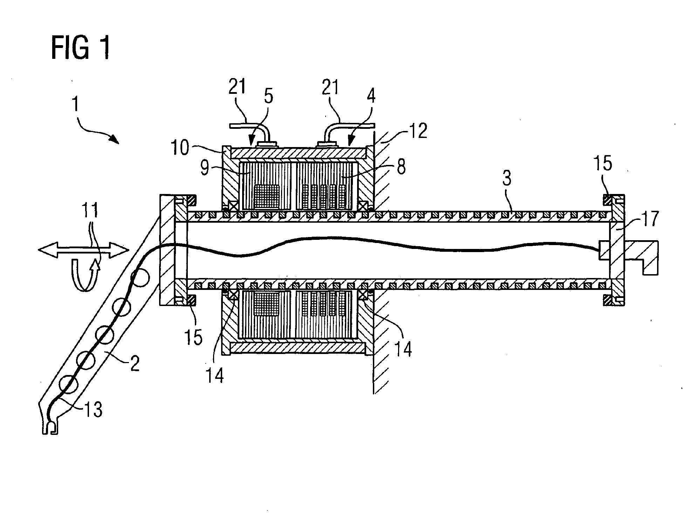

FIG 1 zeigt eine erste Ausgestaltung einer erfindungsgemäßen Werkzeugwechselvorrichtung 1. Die Werkzeugwechselvorrichtung 1 weist einen Werkzeuggreifer 2 und einen Hub- und Schwenkaktor 3 zur Ausführung von Hub- und Schwenkbewegungen auf. Der Hub- und Schwenkaktor 3 ist mittels zwei Direktantrieben 4, 5 antreibbar, wobei ein erster Direktantrieb 4 zur Erzeugung einer Linearbewegung (Hubbewegung) und ein zweiter Direktantrieb 5 zur Erzeugung einer Rotationsbewegung (Schwenkbewegung) angeordnet sind. Die Bewegungsrichtungen des Hub- und Schwenkaktors 3 zeigen die Pfeile 11. Der Hub- und Schwenkaktor 3 ist so ausgebildet, dass er ebenso Drehungen über 360°, beispielsweise mehrere Drehungen um die eigene Achse, ausführen kann.

Der erste Direktantrieb 4 ist als Solenoid-Linearmotor, d. h. Linearmotor mit Solenoidspulen, auch als Ring- bzw. Zylinderspulen bezeichnet, ausgebildet. Aufgrund seiner Funktions-und Wirkungsweise wird der erste Direktantrieb 4 auch als Längsflussmotor bezeichnet.

Der zweite Direktantrieb 5 ist als Torquemotor bzw. Drehmomentmotor ausgebildet, wobei der zweite Direktantrieb 5 aufgrund seiner Funktions- und Wirkungsweise auch als Transversalflussmotor bezeichnet werden kann.

Erster und zweiter Direktantrieb 4, 5 weisen einen gemeinsamen Rotor, auch als Reaktionsteil bezeichnet, auf, welcher der Hub- und Schwenkaktor 3 ist.

Es ist ein erster Direktantrieb 4 für die Hubbewegung mit einem zweiten Direktantrieb 5 zur Realisierung der Schwenkbewegung kombiniert. Dabei nutzen beide Direktantriebe 4, 5 gemeinsam ein Reaktionsteil (Hub- und Schwenkaktor 3).

Der Hub- und Schwenkaktor 3 ist in Form einer Hohlwelle ausgebildet. Dadurch kann der Werkzeuggreifer 2 mit Medien, die für den Betrieb des Werkzeuggreifers (Werkzeugwechselzange) und/oder eines Werkzeugs notwendig sind, über pneumatische oder hydraulische Versorgungsleitungen 13, welche durch den hohlen Hub- und Schwenkaktor 3 geführt sind, versorgt werden. Dabei ist an dem dem Werkzeuggreifer 2 gegenüberliegenden Ende des Hub- und Schwenkaktors 3 eine Drehdurchführung 17 angeordnet, durch die die Leitungen 13 von außen in den Hub-und Schwenkaktor 3 eingeführt werden.

Jeder Direktantrieb 4, 5 weist eine Statorkomponente auf, d. h. es ist eine erste und zweite Statorkomponente 8, 9 vorhanden. Beide Statorkomponenten 8, 9 bilden eine Statoreinheit 10, wobei die Statoreinheit 10 fest mit einem Maschinengestell 12 verbunden ist. Die Statoreinheit 10 ist mittels der Lager 14 am Hub- und Schwenkaktor 3 gelagert. Die Lager 14 sind beispielsweise als Wälzlager, wie Kugellager, ausgebildet.

Da an der Statoreinheit 10 die Anschlussleitungen 21 für die Direktantriebe 4, 5, d. h. insbesondere für die Statorkomponenten 8, 9, angeschlossen sind, müssen die Anschlussleitungen 21 zusammen mit der Statoreinheit 10 nicht mitbewegt werden, wodurch die Dynamik der Werkzeugwechselvorrichtung 1 weiter erhöht wird.

Ferner ist jeweils an einem Ende des Hub- und Schwenkaktors 3 ein Endlagendämpfer 15 angeordnet, welche Stöße des sich bewegenden Hub- und Schwenkaktors 3 an seinen Endbereichen abfangen.

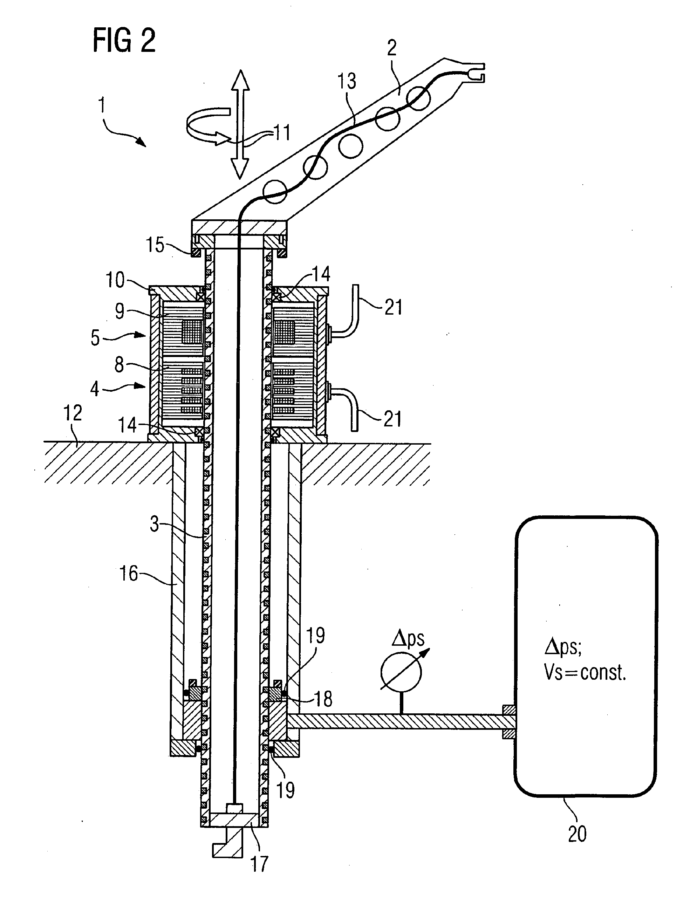

FIG 2 zeigt eine zweite Ausgestaltung einer erfindungsgemäßen Werkzeugwechselvorrichtung 1, welche im Wesentlichen der Werkzeugwechselvorrichtung 1 gemäß FIG 1 entspricht.

Gemäß FIG 2 ist der Hub- und Schwenkaktor 3 zugleich als Zylinderkolben mit Endlagenpuffer 18 eines pneumatischen Zylinders 16 mit Zylinderdichtung 19 ausgebildet, um einen pneumatischen Gewichtsausgleich zur Entlastung der Antriebe 4, 5 im Betrieb und zur Sicherheit bei Betriebsstörungen zu gewährleisten. Dabei ist ein Druckraum des Zylinders 16 direkt an einen Speicher 20 angeschlossen. Der Druck des geschlossenen Systems wird so hoch eingestellt, dass die Gewichtskraft kompensiert wird. Das Systemvolumen im Zylinder 16 und Speicher 20 ist so groß bemessen, dass die Volumenänderung aufgrund von Hubbewegung der Kolbenstange, d. h. Hub- und Schwenkaktor 3, nur eine geringe Druckänderung gegenüber dem eingestellten Systemdruck hervorruft.

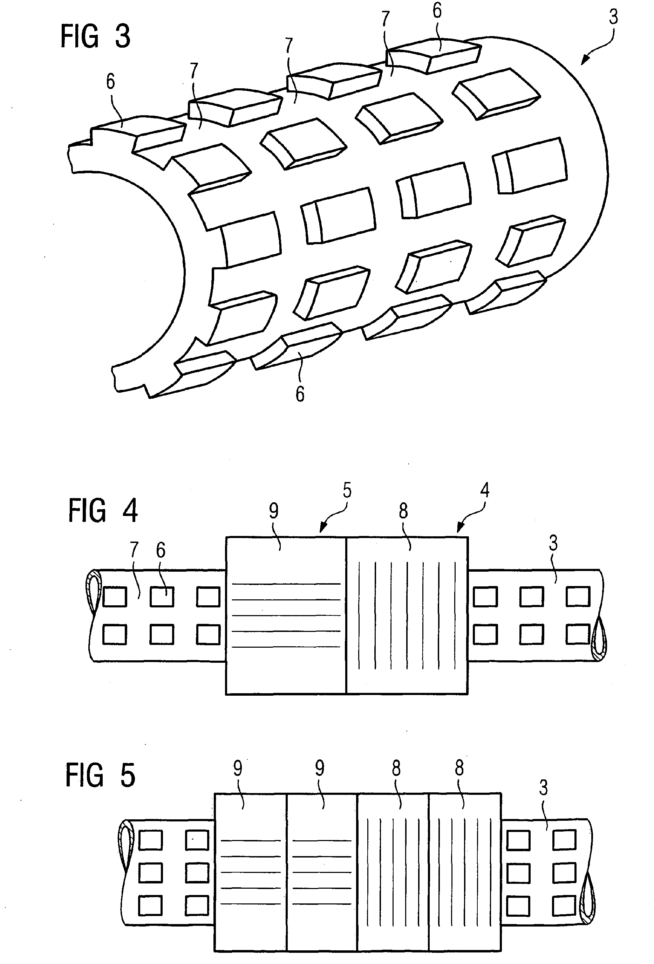

FIG 3 zeigt eine Ausgestaltung für einen Hub- und Schwenkaktor 3. Der Hub- und Schwenkaktor ist hohlwellenförmig ausgebildet und besitzt an seiner Oberfläche Zähne 6 und Nuten 7.

Die Nuten 7 sind in axialer Richtung und in Umfangsrichtung vorhanden, wodurch sich die rechteckigen Zähne 6 ergeben. Der Hub- und Schwenkaktor 3 besitzt keine Wicklung oder Permanentmagnete, so dass er ausschließlich Reluktanz-Wirkung hat.

FIG 4 zeigt eine Prinzipdarstellung des Hub- und Schwenkaktors 3 mit Statoreinheit 10. Die Statorkomponenten 8, 9 sind axial unmittelbar nebeneinander angeordnet. Sie treiben den gemeinsamen Rotor an, welcher der Hub- und Schwenkaktor 3 ist, welcher über seine gesamte axiale Länge die gleiche Struktur besitzt. Das bedeutet, dass der erste Direktantrieb 4 (Linearantrieb) und der zweite Direktantrieb 5 (Rotationsantrieb) den Hub- und Schwenkaktor 3 an praktisch allen axialen Positionen gemeinsam nutzen können. Außerdem kann die gesamte Länge des Hub- und Schwenkaktors 3 zur Kraft- und Momentbildung genutzt werden. Weiterhin ist vorteilhaft, dass auch bei großen Hüben die Statorkomponenten 8, 9 sehr eng zusammengebaut werden können, so dass eine kompakte Bauform gewährleistet werden kann.

Jede Statorkomponente 8, 9 weist eine ein- oder mehrphasige Wicklung (schematisch dargestellt) auf. Insbesondere ist jeweils eine dreiphasige Wicklung zum Anschluss an ein Drehstromnetz vorgesehen. Die Wicklung der ersten Statorkomponente 8 des ersten Direktantriebs, welcher zur Erzeugung der Linear- bzw. Hubbewegung vorgesehen ist, ist dabei mittels Solenoidspulen, auch als Zylinder- oder Ringspulen bezeichnet, ausgebildet. Die Wicklung der zweiten Statorkomponente 9 ist mittels bekannter konzentrierter oder verteilter Wicklung ausgeführt.

Ferner sind an jeder Statorkomponente 8, 9 zusätzlich zur Wicklung Permanentmagnete angeordnet. Somit weist jede Statorkomponente 8, 9 zwei aktive Mittel zur Erzeugung magnetischer Felder auf, wodurch eine höhere Kraftdichte erzielt wird. Diese ist insbesondere daher von Vorteil, da der Hub-und Schwenkaktor 3 (Rotor) frei von aktiven Mitteln zur Erzeugung magnetischer Felder ist. Somit kann der Hub- und Schwenkaktor 3 einfach und kostengünstig hergestellt werden.

FIG 5 zeigt eine Prinzipdarstellung eines Hub- und Schwenkaktors 3 mit mehreren Statorkomponenten 8, 9. Insbesondere sind jeweils zwei Statorkomponenten 8 und zwei Statorkomponenten 9 angeordnet. Die Kraft bzw. das Moment ist somit, je nach gewünschter Anforderung, durch Anordnen weiterer Statorkomponenten 8, 9 einstellbar.

## Patentansprüche

1. Werkzeugwechselvorrichtung (1) mit einem Werkzeuggreifer (2) und einem Hub- und Schwenkaktor (3), welcher mit einem ersten Direktantrieb (4) zur Erzeugung einer Linearbewegung und einem zweiten Direktantrieb (5) zur Erzeugung einer Rotationsbewegung antreibbar ist,
**dadurch gekennzeichnet,**
**dass** der erste und der zweite Direktantrieb (4, 5) einen gemeinsamen Rotor aufweisen, welcher als Hub- und Schwenkaktor (3) dient.

2. Werkzeugwechselvorrichtung (1) nach Anspruch 1,
**dadurch gekennzeichnet,**
**dass** das der Hub- und Schwenkaktor (3) zylinderförmig in Form einer Hohlwelle ausgebildet ist.

3. Werkzeugwechselvorrichtung (1) nach Anspruch 1 oder 2,
**dadurch gekennzeichnet,**
**dass** der Hub- und Schwenkaktor (3) ein Reluktanzprofil mit gleichmäßig sowohl in Umfangsrichtung als auch in axialer Richtung verteilten Zähnen (6) und Nuten (7) aufweist.

4. Werkzeugwechselvorrichtung (1) nach Anspruch 3,
**dadurch gekennzeichnet,**
**dass** in den Nuten (7) des Reluktanzprofils nicht-ferritisches Material angeordnet ist, derart, dass der Hub- und Schwenkaktor (3) eine im Wesentlichen glatte Oberfläche aufweist.

5. Werkzeugwechselvorrichtung (1) nach einem der vorhergehenden Ansprüche,
**dadurch gekennzeichnet,**
**dass** der erste Direktantrieb (4) eine erste Statorkomponente (8) und der zweite Direktantrieb (5) eine zweite Statorkomponente (9) aufweist, wobei beide Statorkomponenten (8, 9) eine Statoreinheit (10) bilden.

6. Werkzeugwechselvorrichtung (1) nach Anspruch 5,
**dadurch gekennzeichnet,**
**dass** die Statoreinheit (10) fest mit einem Maschinengestell (12) verbunden ist.

7. Werkzeugwechselvorrichtung (1) nach Anspruch 5 oder 6,
**dadurch gekennzeichnet,**
**dass** der Hub- und Schwenkaktor (3) als Führung für die Statoreinheit (10) dient, wobei die Führung als Gleitführung oder Kugelbuchse ausgebildet ist.

8. Werkzeugwechselvorrichtung (1) nach Anspruch 5,
**dadurch gekennzeichnet,**
**dass** jede Statorkomponente (8, 9) eine ein- oder mehrphasige Wicklung und Permanentmagnete aufweist.

9. Werkzeugwechselvorrichtung (1) nach Anspruch 8,
**dadurch gekennzeichnet,**
**dass** die Wicklung der ersten Statorkomponente (4) Solenoidspulen aufweist.

10. Werkzeugwechselvorrichtung (1) nach einem der Ansprüche 2 bis 9,
**dadurch gekennzeichnet,**
**dass** der Hub- und Schwenkaktor (3) als Durchführung für pneumatische und/oder hydraulische Versorgungsleitungen für den Werkzeuggreifer und/oder ein Werkzeug dient.

11. Werkzeugwechselvorrichtung (1) nach einem der vorhergehenden Ansprüche,
**dadurch gekennzeichnet,**
**dass** weitere erste und/oder zweite Statorkomponenten (8, 9) anordenbar sind, wobei durch ein Parallelschalten mehrerer Statorkomponenten (8, 9) ein erzeugbares Moment der Direktantriebe einstellbar ist.

12. Werkzeugwechselvorrichtung (1) nach einem der vorhergehenden Ansprüche,
**dadurch gekennzeichnet,**
**dass** der Hub- und Schwenkaktor (3) als Kolben eines pneumatischen oder hydraulischen Zylinders (16) ausgebildet ist, wobei ein Druckraum des Zylinders (16) direkt an einen Speicher (20) angeschlossen ist.
